# EUROPÄISCHE PATENTSCHRIFT

(11) **EP 3 793 423 B1**
(45) Veröffentlichungstag und Bekanntmachung des Hinweises auf die Patenterteilung: **21.08.2024**
(21) Anmeldenummer: 19710365.8
(22) Anmeldetag: 07.03.2019
(51) Int. Cl.: A47L 13/51, B62B 5/00

(54) **REINIGUNGSWAGEN UND REINIGUNGSSYSTEM**
CLEANING CART AND CLEANING SYSTEM
CHARIOT DE NETTOYAGE ET SYSTÈME DE NETTOYAGE

(30) Priorität: 14.05.2018 DE 102018111423
(43) Veröffentlichungstag der Anmeldung: 24.03.2021
(73) Patentinhaber: Carl Freudenberg KG, 69469 Weinheim (DE)
(72) Erfinder: TUFFT, Andrew, Moonee Ponds, VIC 3039 (AU); FOMIN, Pavel, Moscow, 127642 (RU); ZIELBAUER, Manfred, 69493 Hirschberg (DE); EISENHUT, Andreas, 82049 Pullach (DE)
(86) Internationale Anmeldenummer: PCT/EP2019/055649
(87) Internationale Veröffentlichungsnummer: WO 2019/219259

(56) Entgegenhaltungen:
- EP-A1- 2 121 411
- WO-A1-2017/031177
- WO-A1-96/04161

## Beschreibung

Die Erfindung betrifft ein Reinigungssystem mit einem Reinigungswagen, umfassend ein Gestell, welches mit Reinigungsutensilien bestückbar ist.

Aus dem Stand der Technik sind Reinigungswagen bekannt, umfassend ein Gestell, welches mit Reinigungsutensilien bestückbar ist. Das Gestell des Reinigungswagens ist zumeist mit Rädern ausgestattet, so dass der Reinigungswagen durch das Reinigungspersonal durch die zu reinigenden Bereichen geschoben werden kann. Das Gestell ist dabei so ausgebildet, dass es modular mit Reinigungsutensilien bestückbar ist. Die Reinigungsutensilien können dabei Feucht- und Trockenwischgeräte, Wischeimer, Aufbewahrungsboxen für Wischbezüge, Aufbewahrungsboxen für kleinteilige Reinigungsutensilien wie Reinigungsmittelbehälter und Wischtücher, Auswringvorrichtungen und Halter für sonstige Wischgeräte sein.

Dabei ist es möglich, den Reinigungswagen je nach Reinigungsaufgabe mit den erforderlichen Reinigungsutensilien zu bestücken.

Problematisch ist hierbei, dass dabei die Reinigungskraft für das Bestücken des Reinigungswagens verantwortlich ist und dass die Gefahr besteht, dass wesentliche Reinigungsutensilien vergessen werden oder nicht benötigte Reinigungsutensilien an dem Reinigungswagen angebracht werden.

DE 10 2007 008 133 A1 zeigt einen Reinigungswagen, der mit einem elektronisch lesbaren Informationsträger versehen ist.

Der Erfindung liegt die Aufgabe zugrunde, ein Reinigungssystem mit einem Reinigungswagen bereitzustellen, welches eine optimale Anpassung des Reinigungswagens an die Reinigungsaufgabe ermöglicht.

Diese Aufgabe wird mit den Merkmalen von Anspruch 1 gelöst. Auf vorteilhafte Ausgestaltungen nehmen die Unteransprüche Bezug.

Der Reinigungswagen zur Lösung der Aufgabe umfasst ein Gestell, welches mit Reinigungsutensilien bestückbar ist, wobei das Gestell mit einer maschinenlesbaren Kennung versehen ist. Die Kennung ist dabei so gewählt, dass jeder Reinigungswagen eine eineindeutige Kennung besitzt, durch die jeder Reinigungswagen identifizierbar ist.

Die Kennung ist erfindungsgemäß ein optisch auslesbarer Code. Ein derartiger Code ist beispielsweise ein Barcode. Dieser kann mit einem geeigneten Auslesegerät ausgelesen werden. Mögliche Auslesegeräte sind dabei vorzugsweise mobile Endgeräte, wie beispielsweise Smartphones und Tablets. Durch das Auslesen des Codes kann der Reinigungswagen identifiziert werden. Neben dem optisch auslesbaren Code ist auch eine Funkübertragung der Kennung denkbar, beispielsweise mittels RFID-Technik oder NFC-Technik. Alternativ ist auch denkbar, die eineindeutige Kennung über ein kabelgebundenes Medium auszulesen. Dabei kann der Reinigungswagen mit einer Schnittstelle ausgerüstet sein, so dass die Kennung über ein Kabel, beispielsweise einem Netzwerkkabel oder einem USB-Kabel ausgelesen werden kann.

Die Kennung kann ein QR-Code sein. Ein QR-Code weist eine automatische Fehlerkorrektur auf, so dass das Auslesen eines QR-Codes sehr robust ist.

Der Reinigungswagen ist mit Reinigungsutensilien bestückbar, wobei die Reinigungsutensilien ausgebildet sein können als Nasswischgerät, Trockenwischgerät, Staubwischgerät, Wischeimer, Wischeimer mit Reinigungsflüssigkeit, Wischeimer mit Auswringvorrichtung, Aufnahmebehälter für kleinteilige Reinigungsutensilien wie Sprühflaschen, Reinigungsflaschen und Wischtücher, Aufnahmeeinrichtungen für Müllbeutel und/oder als Boxen für frische und benutzte Wischbezüge. Zu den Reinigungsutensilien gehören auch Verbrauchsmaterialien wie Toilettenpapier, Seife und Handtücher.

Das erfindungsgemäße Reinigungssystem umfasst einen Reinigungswagen und eine Datenverarbeitungseinrichtung, wobei der Reinigungswagen durch die Kennung in der Datenverarbeitungseinrichtung identifizierbar ist.

Dabei weist die Datenverarbeitungseinrichtung erfindungsgemäß eine Datenbank auf, in welcher die Kennungen der Reinigungswagen hinterlegt sind. Des Weiteren umfasst die Datenverarbeitungseinrichtung mobile Endgeräte, welche auf die Datenbank zugreifen können. Das mobile Endgerät ist erfindungsgemäß mit einer Einrichtung zum Auslesen der maschinenlesbaren Kennung des Reinigungswagens versehen, so dass der Reinigungswagen nach dem Scannen der maschinenlesbaren Kennung durch das mobile Endgerät identifizierbar ist. Mobile Endgeräte können beispielsweise Smartphones sein, welche mittels einer Software auf die Datenbank zugreifen können.

In der Datenverarbeitungseinrichtung können auf Reinigungsaufgaben abgestimmte Zusammenstellungen von Reinigungsutensilien hinterlegbar sein. In Abhängigkeit der Reinigungsaufgaben können dabei vorzugsweise in der Datenbank die für die Reinigungsaufgabe erforderlichen Reinigungsutensilien aufgeführt werden. Definierbare Reinigungsaufgaben sind beispielsweise die Reinigung von Reinraumbereichen in der industriellen Fertigung, die Reinigung von Operationssälen von Krankenhäusern oder allgemein eine Feuchtreinigung und eine Trockenreinigung. Je nach Ausgestaltung der zu reinigenden Bereiche und der tatsächlichen Reinigungsaufgabe können dabei Reinigungsutensilien bestimmt werden, die für die Reinigungsaufgabe erforderlich sind und an dem Reinigungswagen angebracht sein sollen.

Nach dem Auslesen der Kennung ist es auch möglich, einen Reinigungswagen zu lokalisieren. Des Weiteren können Reinigungswagen mittels der Kennung zentral in der Datenverarbeitungseinrichtung inventarisiert werden.

Des Weiteren ist es möglich, einen vorbestimmten Reinigungswagen für eine Reinigungsaufgabe auszuwählen. Wird nun der vorausgewählte Reinigungswagen mittels Auslesen der maschinenlesbaren Kennung identifiziert, ist es möglich, die für die vorbestimmte Reinigungsaufgabe abgestimmte Zusammenstellung der Reinigungsutensilien anzuzeigen, so dass der Reinigungswagen entsprechend der Reinigungsaufgabe mit Reinigungsutensilien bestückbar ist.

Der Zustand des Reinigungswagens kann in der Datenverarbeitungseinrichtung hinterlegbar sein. Ist der Reinigungswagen in der Datenverarbeitungseinrichtung durch Auslesen der maschinenlesbaren Kennung identifiziert, ist es möglich, dass in der Datenverarbeitungseinrichtung Merkmale betreffend den Zustand des Reinigungswagens hinterlegbar sind. Beispielsweise können Beschädigungen und auszutauschende Teile des Reinigungswagens vermerkt werden. Angaben den Zustand des Reinigungswagens betreffend können in Form von Text oder Fotografien in der Datenverarbeitungseinrichtung hinterlegbar sein. Die Fotografien können beispielsweise mit einem mobilen Endgerät wie einem Smartphone aufgenommen werden und in der Datenverarbeitungseinrichtung hinterlegt werden. Durch Hinterlegen des Zustandes kann automatisiert eine Reparatur des Reinigungswagens veranlasst werden.

Der Reinigungswagen kann mit dem mobilen Endgerät ausrüstbar sein. Dazu kann der Reinigungswagen mit einer Aufnahme ausgerüstet sein, in welcher das mobile Datenverarbeitungsgerät befestigbar ist.

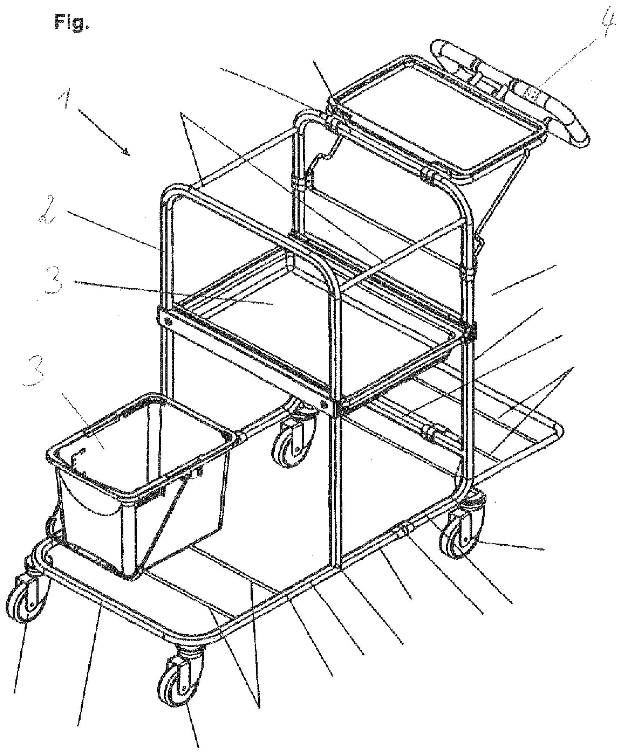

Eine Ausgestaltung des erfindungsgemäßen Reinigungswagens und des erfindungsgemäßen Reinigungssystems wird nachfolgend anhand der Figur näher erläutert. Diese zeigt schematisch:
Fig. den Reinigungswagen.

Die Figur zeigt einen Reinigungswagen 1, umfassend ein Gestell 2, mit Handgriff und Rädern, wobei das Gestell 2 modular mit Reinigungsutensilien 3 bestückbar ist
Das Gestell 2 ist im Bereich des Handgriffes mit einer maschinenlesbaren Kennung 4 in Form eines optisch auslesbaren QR-Codes versehen. Durch die Kennung 4 ist der Reinigungswagen 1 eindeutig identifizierbar.

Das Reinigungssystem, umfasst einen Reinigungswagen 1 und eine Datenverarbeitungseinrichtung, wobei der Reinigungswagen 1 durch die maschinenlesbare Kennung 4 in der Datenverarbeitungseinrichtung identifizierbar ist.

In der Datenverarbeitungseinrichtung sind auf Reinigungsaufgaben abgestimmte Zusammenstellungen von Reinigungsutensilien 3 hinterlegt.

Des Weiteren ist der Zustand des Reinigungswagens 1 in der Datenverarbeitungseinrichtung hinterlegt.

Die Datenverarbeitungseinrichtung weist eine zentrale Datenbank und zumindest ein mobiles Datenverarbeitungsgerät auf, wobei der Reinigungswagen 1 mit dem mobilen Datenverarbeitungsgerät ausrüstbar ist.

## Patentansprüche

1. Reinigungssystem, umfassend einen Reinigungswagen (1) und eine Datenverarbeitungseinrichtung, wobei der Reinigungswagen (1) ein Gestell (2) umfasst, welches mit Reinigungsutensilien (3) bestückbar ist, wobei das Gestell (2) mit einer eineindeutigen maschinenlesbaren Kennung (4) versehen ist, wobei der Reinigungswagen durch die Kennung (4) eindeutig identifizierbar ist und wobei der Reinigungswagen (1) durch die maschinenlesbare Kennung (4) in der Datenverarbeitungseinrichtung identifizierbar ist, wobei die Kennung (4) ein optisch auslesbarer Code ist, **dadurch gekennzeichnet, dass** die Datenverarbeitungseinrichtung eine zentrale Datenbank und zumindest ein mobiles Datenverarbeitungsgerät aufweist, wobei das mobile Datenverarbeitungsgerät mit einer Einrichtung zum Auslesen der maschinenlesbaren Kennung versehen ist, wobei das Datenverarbeitungsgerät ausgerüstet ist, auf die Datenbank zuzugreifen.

2. Reinigungssystem nach Anspruch 1, **dadurch gekennzeichnet, dass** die Kennung (4) ein QR-Code ist.

3. Reinigungssystem nach Anspruch 1, **dadurch gekennzeichnet, dass** in der Datenverarbeitungseinrichtung auf Reinigungsaufgaben abgestimmte Zusammenstellungen von Reinigungsutensilien (3) hinterlegbar sind.

4. Reinigungssystem nach Anspruch 1, **dadurch gekennzeichnet, dass** der Zustand des Reinigungswagens (1) in der Datenverarbeitungseinrichtung hinterlegbar ist.

5. Reinigungssystem nach Anspruch 1, **dadurch gekennzeichnet, dass** der Reinigungswagen (1) mit dem mobilen Datenverarbeitungsgerät ausrüstbar ist.

## Claims

1. Cleaning system, comprising a cleaning cart (1) and a data processing device, wherein the cleaning cart (1) comprises a frame (2) that can be fitted with cleaning utensils (3), wherein the frame (2) is provided with a biunique machine-readable identifier (4), wherein the cleaning cart is uniquely identifiable by the identifier (4) and wherein the cleaning cart (1) is identifiable by the machine-readable identifier (4) in the data processing device, the identifier (4) being an optically readable code, **characterized in that** the data processing device has a central database and at least one mobile data processing unit, the mobile data processing unit being provided with a device for reading the machine-readable identifier, wherein the data processing unit is equipped to access the database.

2. Cleaning system according to Claim 1, **characterized in that** the identifier (4) is a QR code.

3. Cleaning system according to Claim 1, **characterized in that** the data processing device can be used to store combinations of cleaning utensils (3) matched to cleaning tasks.

4. Cleaning system according to Claim 1, **characterized in that** the state of the cleaning cart (1) can be stored in the data processing device.

5. Cleaning system according to Claim 1, **characterized in that** the cleaning cart (1) can be equipped with the mobile data processing unit.

## Revendications

1. Système de nettoyage, comprenant un chariot de nettoyage (1) et un dispositif de traitement de données, dans lequel le chariot de nettoyage (1) comprend un châssis (2) qui peut être équipé d'ustensiles de nettoyage (3), dans lequel le châssis (2) est muni d'un identifiant (4) biunivoque, lisible par machine, dans lequel le chariot de nettoyage peut être identifié de manière univoque à l'aide de l'identifiant (4), et dans lequel le chariot de nettoyage (1) peut être identifié à l'aide de l'identifiant (4) lisible par machine dans le dispositif de traitement de données, dans lequel l'identifiant (4) est un code lisible de manière optique,
**caractérisé en ce que** le dispositif de traitement de données présente une base de données centrale et au moins un appareil de traitement de données mobile, dans lequel l'appareil de traitement de données mobile est muni d'un dispositif pour lire l'identifiant lisible par machine, dans lequel l'appareil de traitement de données est équipé pour accéder à la base de données.

2. Système de nettoyage selon la revendication 1, **caractérisé en ce que** l'identifiant (4) est un code QR.

3. Système de nettoyage selon la revendication 1, **caractérisé en ce que** des ensembles d'ustensiles de nettoyage (3), adaptés à des tâches de nettoyage, peuvent être sauvegardés dans le dispositif de traitement de données.

4. Système de nettoyage selon la revendication 1, **caractérisé en ce que** l'état du chariot de nettoyage (1) peut être sauvegardé dans le dispositif de traitement de données.

5. Système de nettoyage selon la revendication 1, **caractérisé en ce que** le chariot de nettoyage (1) peut être équipé de l'appareil de traitement de données mobile.
